# EUROPÄISCHE PATENTANMELDUNG

(11) **EP 3 557 654 A1**
(43) Veröffentlichungstag der Anmeldung: **23.10.2019**
(21) Anmeldenummer: 19168626.0
(22) Anmeldetag: 11.04.2019
(51) Int. Cl.: H01M 2/10, B60R 19/02, H01M 10/613, H01M 10/6555, H01M 10/6567

(54) **MONTAGEANORDNUNG EINES ELEKTRISCH ANTREIBBAREN KRAFTFAHRZEUGS**

(30) Priorität: 17.04.2018 DE 102018205765
(71) Anmelder: VOLKSWAGEN AKTIENGESELLSCHAFT, 38440 Wolfsburg (DE)
(72) Erfinder: Hohm, Volker, 38162 Destedt (DE); Pabst, Uwe, 38889 Blankenburg (Harz) (DE); Ströhlein, Tobias, 38110 Braunschweig (DE); Bornemann, Krino, 39326 Klein Ammensleben (Niedere Börde) (DE); Herten, Helge, 38102 Braunschweig (DE); Bokelmann-Grotefend, Christoph, 31226 Peine (DE)

(57) **Zusammenfassung**

Die Erfindung betrifft eine Montageeanordnung eines elektrisch antreibbaren Kraftfahrzeugs (K) mit wenigstens einem, mehrere Batteriezellen (16) zu einem Batteriemodul (B) aufnehmenden Batteriemodulgehäuse (11). Das Batteriemodul (B) ist mit seiner Längserstreckung (l2) quer zu einer Längserstreckung (l1) des Kraftfahrzeugs (K) ausgerichtet. Ferner ist wenigstens ein gesondertes Lastweiterleitungselement (12) zur Weiterleitung einer auftretenden Crashlast (L) vorhanden.

Die Erfindung schlägt vor, dass das Lastweiterleitungselement (12) an jeder Stirnseite des Batteriemodulgehäuses (11) zwischen einem Karosseriebauteil (10) und einer Stirnseite des Batteriemodulgehäuses (11) angeordnet ist. Die Anordnung erfolgt derart, dass bei einer in das Karosserieteil (10) eingeleiteten Crashlast (L) ein Lastpfad (LPF) gebildet wird, der zumindest das crashzugewandte Karosseriebauteil (10), das crashzugewandte Lastweiterleitungselement (12), das Batteriemodulgehäuse (11), das crashabgewandte Lastweiterleitungselement (12) und schließlich das crashabgewandte Karosseriebauteil (10) umfasst.

## Beschreibung

Die Erfindung betrifft eine Montageanordnung eines elektrisch antreibbaren Kraftfahrzeugs mit den Merkmalen vom Oberbegriff des Patentanspruchs 1. Die Erfindung betrifft auch ein Batteriemodul mit den Merkmalen vom Oberbegriff des Patentanspruchs 9 und ein Lastweiterleitungselement mit den Merkmalen von Patentanspruch 12.

Eine Montageanordnung mit den Merkmalen vom Oberbegriff des Patentanspruchs 1 ist aus der DE 10 2009 035 492 A1 bekannt geworden. Konkret wird dort ein Batteriemodulgehäuse vorgeschlagen, welches mit zwei Crashleitelementen versehen ist, die zwischen den Batteriezellen angeordnet sind und in Richtung des Batteriemodulgehäuses seitlich über die Batteriezellen beziehungsweise über den durch diese gebildeten Zellenstapel hinausragen. Bei einer auftretenden Crashlast soll so die Wandung des Batteriemodulgehäuses nicht gegen die Batteriezellen, sondern gegen die Crashleitelemente gedrückt werden. Die Crashlast wird dann durch die Crashleitelemente auf die andere Seite des Zellenstapels geleitet und auch dort nur an das Batteriemodulgehäuse weitergegeben.

In der DE 10 2013 102 502 A1 ist ein Kraftfahrzeug mit einem Schutzprofil beschrieben, welches zum Schutz einer Traktionsbatterie des Kraftfahrzeugs bei einem Heckaufprall vorgesehen ist. Das Schutzprofil ist im Heckbereich des Kraftfahrzeugs zwischen der Traktionsbatterie und einem heckseitigen Querträger angeordnet und ist aus faserverstärktem Kunststoff ausgebildet. Das Schutzprofil ist in der Lage, selbst punkt- oder linienförmig auf das Schutzprofil eintreffende Lasten in eine großflächige Flächenlast aufzuteilen. Somit können Spannungsspitzen an der Traktionsbatterie abgebaut oder eliminiert werden.

Der DE 10 2014 217 160 A1 ist ein Batteriemodulsystem für ein Kraftfahrzeug zu entnehmen. Hierbei sind mehrere Batteriezellen zu einem Batteriemodulsystem zusammengefasst und auf einer Kühlplatte angeordnet. Die Batteriezellen sind an jeder Stirnseite des Batteriemodulsystems mit einer Adapterplatte abgeschlossen. Dabei werden die Batteriezellen von einem vertikal und einem horizontal umlaufenden Band zusammengehalten, wobei die Adapterplatten Aussparungen zur Aufnahme eines der Bänder aufweisen.

Der vorliegenden Erfindung liegt die Aufgabe zu Grunde, eine alternative Montageanordnung eines elektrisch antreibbaren Kraftfahrzeugs mit den Merkmalen vom Oberbegriff des Patentanspruchs 1 bereitzustellen, bei dem eine auftretende Crashlast derart weitergeleitet werden kann, dass eine Beschädigung von Batteriezellen vermieden wird.

Der vorliegenden Erfindung liegt ferner die Aufgabe zu Grunde, ein geeignetes Batteriemodul zur Montage in einer erfindungsgemäßen Montageanordnung bereitzustellen. Schließlich liegt der Erfindung noch die Aufgabe zugrunde, ein geeignetes Lastweiterleitungselement zur Montage in einer solchen Montageanordnung vorzuschlagen.

Vorgenannte Aufgaben werden durch eine Montageanordnung mit den Merkmalen von Patentanspruch 1, durch ein Batteriemodul mit den Merkmalen von Patentanspruch 9 sowie durch ein Lastweiterleitungselement mit den Merkmalen von Patentanspruch 12 gelöst.

Vorteilhafte Ausbildungen beziehungsweise Weiterbildungen der Erfindung sind den jeweils abhängigen Ansprüchen entnehmbar.

Die Erfindung geht dabei zunächst von einer Montageanordnung eines elektrisch antreibbaren Kraftfahrzeugs mit wenigstens einem, mehrere Batteriezellen zu einem Batteriemodul aufnehmenden Batteriemodulgehäuse aus. Das Batteriemodul bzw. das Batteriemodulgehäuse ist mit seiner Längserstreckung quer, insbesondere rechtwinklig zu einer Längserstreckung des Kraftfahrzeugs ausgerichtet. Es ist wenigstens ein gesondertes Lastweiterleitungselement zur Weiterleitung einer auftretenden Crashlast vorhanden. Als elektrisch antreibbare Kraftfahrzeuge kommen beispielsweise Hybridfahrzeuge (HEV = Hybrid Electric Vehicle), Plug-In-Hybridfahrzeuge (PHEV = Plug-In Hybrid Electric Vehicle) oder auch reine Elektrofahrzeuge, also Batteriefahrzeuge (BEV = Battery Electric Vehicle) in Betracht.

Die Erfindung schlägt nun vor, dass das Lastweiterleitungselement an jeder Stirnseite des Batteriemodulgehäuses zwischen einem Karosseriebauteil und einer Stirnseite des Batteriemodulgehäuses angeordnet ist. Die Anordnung erfolgt derart, dass bei einer in das Karosserieteil eingeleiteten Crashlast ein Lastpfad gebildet wird, der zumindest das crashzugewandte Karosseriebauteil, das crashzugewandte Lastweiterleitungselement, das Batteriemodulgehäuse, das crashabgewandte Lastweiterleitungselement und schließlich das crashabgewandte Karosseriebauteil umfasst.

Auf Grund des Lastweiterleitungselementes an den Stirnseiten des Batteriemodulgehäuses und die damit verbundene Realisierung einer großen Lastweiterleitungsfläche wird also auch eine Lastweiterleitung über das Batteriemodulgehäuse selbst ermöglicht. Somit ist ein durchgängiger Lastweiterleitungspfad vom crashzugewandten bis hin zum crashabgewandten Karosseriebauteil möglich. Auf diese Weise ist ein gesonderter, gegebenenfalls mehrere Batteriemodule umspannender Batteriegehäuserahmen beziehungsweise ein Batteriegehäuse nicht unbedingt mehr erforderlich. Gewicht kann somit eingespart werden.

Um eine leichte Realisierbarkeit des gewünschten Lastweiterleitungspfades zu erreichen, wird in einer Weiterbildung vorgeschlagen, dass sich das Lastweiterleitungselement zumindest bereichsweise gegen eine stirnseitige Fläche des Batteriemodulgehäuses abstützt und am Karosseriebauteil befestigt ist. Dabei stützt sich das Lastweiterleitungselement vorzugsweise unmittelbar gegen die stirnseitige Fläche des Batteriemodulgehäuses ab. So kann in Fahrzeugquerrichtung (Y-Richtung) zusätzlich Montageplatz eingespart werden.

Um eine Lastweiterleitung für einen Seitenaufprall zu optimieren, wird in einer Ausbildung des Erfindungsgedankens vorgeschlagen, dass die Karosseriebauteile Schweller sind, also die zwischen den Radkästen befindlichen Längsträger.

Gemäß einer anderen Ausbildung der Erfindung ist das Lastweiterleitungselement im Umriss viereckartig, insbesondere rechteckartig ausgebildet. Dabei stützt sich das Lastweiterelement zumindest bereichsweise mit einer stirnseitigen Fläche gegen eine stirnseitige Fläche des Batteriemodulgehäuses ab, während es mit einer Seitenfläche das Batteriemodulgehäuse innen- und/oder außenseitig berührt.

Hierdurch kann eine sehr gute Lastweiterleitung einer Crashlast vom Lastweiterleitungselement in das Batteriemodulgehäuse erfolgen, wobei zusätzlich eine gute Justierung des Lastweiterleitungselementes an der Stirnseite des Batteriemodulgehäuses möglich ist.

Um die Flexibilität und Zugänglichkeit der Montageanordnung zu erhöhen, wird in einer anderen Weiterbildung auch vorgeschlagen, das Lastweiterleitungselement im Umriss rahmenartig auszubilden. So wird innerhalb des Lastweiterleitungselementes eine Zugangsöffnung ausgebildet, die beispielsweise für wärmeabführende Elemente genutzt werden kann.

Um bei einer Weiterleitung einer auftretenden Crashlast keine direkte Belastung vom Deckel und vom Boden des Batteriemodulgehäuses zu erzeugen, wird nach einer anderen Weiterbildung vorgeschlagen, dass sich das Lastweiterleitungselement mit seiner stirnseitigen Fläche lediglich oder zumindest überwiegend gegen stirnseitige Flächen von Seitenwandungen des Batteriemodulgehäuses abstützt. Die Abstützung erfolgt also nicht oder nur zu einem unwesentlichen Teil gegen stirnseitige Flächen vom Deckel oder vom Boden des Batteriemodulgehäuses.

Um eine optimale Weiterleitung der im Batteriemodul erzeugten Betriebswärme erreichen zu können, ist zwischen den Batteriezellen wenigstens ein plattenartiges Bauteil mit einem Wärmeübertragungselement angeordnet. Das plattenartige Bauteil ist an einer Stirnseite des Batteriemodulgehäuses über eine wärmeleitende Verbindung mit einer Kühlmittel-Leitung verbunden. Die Kühlmittel-Leitung kann auch die Wärme von anderen, gegebenenfalls vorhandenen Batteriemodulgehäusen abführen.

Da durch das Lastweiterleitungselement eine große Auflagefläche zur Lastweiterleitung bereitgestellt werden und zugleich das Auftreten von ungeeigneten Beanspruchungszuständen für das Batteriemodulgehäuse verringern werden kann, wird der vorteilhafte Einsatz eines aus Faserverbundkunststoff bestehenden Batteriemodulgehäuses ermöglicht. Hierdurch kann das Gewicht des Batteriemodulgehäuses nennenswert reduziert werden.

Wie bereits erwähnt, soll mit der Erfindung auch ein Batteriemodul vorgeschlagen werden, welche zur Montage in einer erfindungsgemäßen Montageanordnung geeignet ist. Ein solches Batteriemodul weist ein Batteriemodulgehäuse auf, welches mehrere Batteriezellen aufnimmt. In einer Stapelrichtung der Batteriezellen gesehen ist zwischen den Batteriezellen wenigstens ein plattenartiges Bauteil mit einem Wärmeübertragungselement angeordnet. Das plattenartige Bauteil ist mit seiner Flächenerstreckung insbesondere parallel zur Flächenerstreckung der Batteriezellen ausgerichtet. Hierdurch kann eine wirksame Herausführung entstehender Wärme aus dem Batteriemodul ermöglicht werden.

Dies kann noch dadurch optimiert werden, indem sich das Wärmeübertragungselement mäanderförmig über die Fläche des plattenartigen Bauteils erstreckt.

Zur Optimierung der Wärmeübertragung ist das Wärmeübertragungselement nach Art eines Wärmerohrs (sogenannte Heatpipe) ausgebildet. Der grundsätzliche Aufbau und die Funktionsweise eines Wärmerohrs sind aus dem allgemeinen Stand der Technik hinlänglich bekannt und sollen daher hier nicht näher beschrieben werden. In jedem Fall ist dadurch eine sehr wirksame Wärmeabfuhr der im Batteriemodul entstehenden Betriebswärme möglich.

Mit der Erfindung soll schließlich auch ein Lastweiterelement zur Montage in der vorgeschlagenen Montageanordnung vorgestellt werden. Ein solches Lastweiterleitungselement ist im Umriss viereckartig, insbesondere rechteckartig ausgebildet, mit einem zumindest bereichsweise L-förmigen Querschnitt. Durch den L-förmigen Querschnitt werden eine stirnseitige Fläche und ein davon rechtwinklig abstehende Seitenfläche ausgebildet.

Hierdurch werden auf konstruktiv einfache Weise eine gute Lastweiterleitung durch das Lastweiterleitungselement und eine leichte, stirnseitige Justierung des Lastweiterleitungselementes am Batteriemodulgehäuse ermöglicht.

Um die Flexibilität und den Zugang zu einer durch das Lastweiterleitungselement gebildeten Montageanordnung erhöhen zu können, wird gemäß einer weiteren Ausbildung das Lastweiterleitungselement im Umriss rahmenartig ausgebildet.

Eine Entgasung des Batteriemoduls kann dadurch erleichtern werden, wenn in einer anderen Weiterbildung in die Seitenfläche des Lastweiterleitungselementes zumindest bereichsweise mehrere rillenartige Vertiefungen eingebracht sind, die sich ausgehend von der stirnseitigen Fläche rechtwinklig zu dieser über die Seitenfläche erstrecken.

Bevorzugte Ausführungsbeispiele der Erfindung sind in den Figuren dargestellt und werden anhand der Figuren in der nachfolgenden Beschreibung näher erläutert. Dadurch werden auch noch weitere Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht oder zumindest nicht immer maßstabsgetreu. In manchen Figuren können Proportionen oder Abstände übertrieben dargestellt sein, um Merkmale eines Ausführungsbeispiels deutlicher hervorheben zu können.

Es zeigen, jeweils schematisch
- Fig. 1: ein elektrisch antreibbares Kraftfahrzeug mit einer erfindungsgemäßen Montageanordnung,
- Fig. 2: eine perspektivische Darstellung eines Batteriemodulgehäuses und eines stirnseitig befestigbaren Lastweiterleitungselementes,
- Figuren 3: das Lastweiterleitungselement in verschiedenen Ansichten, in einer ersten Ausführungsform,
- Fig. 4: einen detaillierten Ausschnitt aus der Montageanordnung gemäß Detail IV aus Fig. 1, ohne Darstellung des mit dem Lastweiterleitungselement verbundenen Karosseriebauteils,
- Fig. 5: eine Darstellung vergleichbar mit Fig. 4, jedoch mit Darstellung des mit dem Lastweiterleitungselement befestigten Karosseriebauteil,
- Fig. 6: die Darstellung eines Batteriemoduls in einem Längsschnitt,
- Fig. 7: die Darstellung eines im Batteriemodul angeordneten, plattenartigen Bauteils zur Wärmeübertragung aus einer Ansicht VII gemäß Fig. 6,
- Fig. 8: die perspektivische Darstellung des Lastweiterleitungselementes, in einer zweiten Ausführungsform,
- Fig. 9: die Darstellung des Lastweiterleitungselementes aus den Figuren 3, mit einem zusätzlichen Dichtelement,
- Fig. 10: einen Längsschnitt gemäß Schnittverlauf X aus Fig. 9, wobei das Batteriemodulgehäuse zusätzlich verdreht ist,
- Fig. 11: einen Längsschnitt gemäß Schnittverlauf XI aus Fig. 10,
- Fig. 12: die Darstellung des Lastweiterleitungselementes, in einer dritten Ausführungsform und
- Fig. 13: die Darstellung gemäß Ansicht XIII aus Fig. 12.

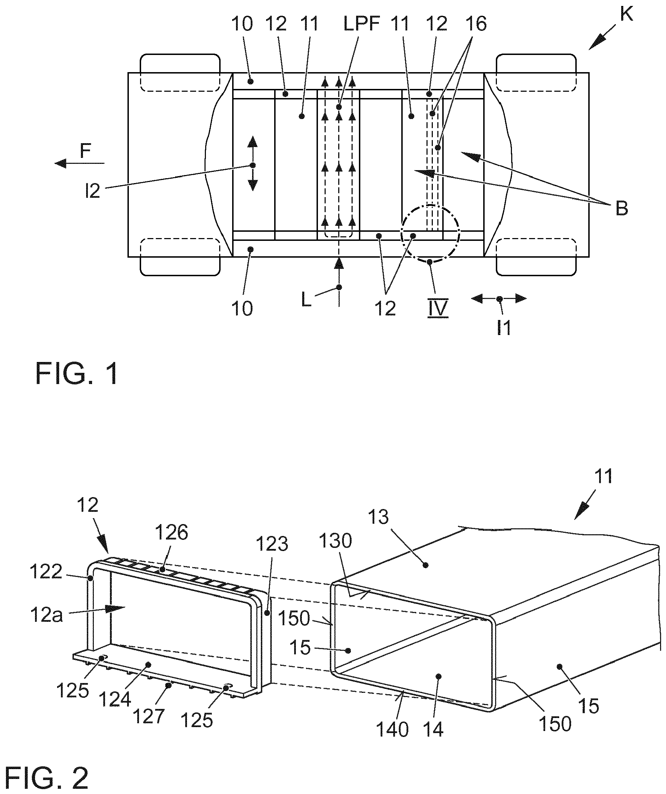

In Fig. 1 ist ein elektrisch antreibbares Kraftfahrzeug K, insbesondere ein Elektrofahrzeug dargestellt. Zum Antrieb ist das Kraftfahrzeug K mit einer Traktionsbatterie versehen, welche aus mehreren Batteriemodulen B besteht.

Jedes Batteriemodul B weist ein Batteriemodulgehäuse 11 auf, in dem stapelartig aneinander gereihte Batteriezellen 16 (nur teilweise angedeutet) angeordnet sind. Die Batteriezellen 16 erstrecken sich mit ihrer Längsrichtung parallel zu einer Längserstreckung I2 der Batteriemodulgehäuse 11.

Ferner sind die Batteriemodulgehäuse 11 mit ihrer Längserstreckung I2 quer, insbesondere rechtwinklig zu einer Längserstreckung I1 des Kraftfahrzeugs K ausgerichtet. Zwischen zwei Karosseriebauteilen 10 in Form von Schwellern sind sechs Batteriemodulgehäuse 11 in Längserstreckung I1 des Kraftfahrzeugs K beziehungsweise in dessen gewöhnlicher Fahrtrichtung F aneinandergereiht.

Des Weiteren ist an jeder Stirnseite eines Batteriemodulgehäuses 11, und zwar zwischen seiner Stirnseite und dem Karosseriebauteil 10 ein Lastweiterleitungselement 12 angeordnet.

Die Montageanordnung erfolgt derart, dass bei einer seitlich auf das Kraftfahrzeug K auftreffenden Crashlast L ein Lastpfad LPF realisiert ist, welcher, ausgehend vom crashzugewandten Karosseriebauteil 10, das crashzugewandte Lastweiterleitungselement 12, das Batteriemodulgehäuse 11, dann das crashabgewandte Lastweiterleitungselement 12 und schließlich das crashabgewandte Karosseriebauteil 10 umfasst.

Durch den so ermöglichten Lastpfad LPF kann ein sehr guter Crashschutz für die Batteriemodule B erzielt werden, so dass ein alle Batteriemodule B umspannendes Batteriegehäuse mit wiederum separaten, inneren Laststrukturen (z.B. Stegen) nicht mehr unbedingt notwendig ist.

Anhand der Fig. 2 ist ein stirnseitiges Ende eines leeren Batteriemodulgehäuses 11 dargestellt, mit dem das Lastweiterleitungselement 12 verbindbar ist.

Das Batteriemodulgehäuse 11 weist im Umriss beziehungsweise im Querschnitt eine viereckige, insbesondere rechteckige Form auf. Es hat eine obere Wandung 13, eine untere Wandung 14 sowie zwei Seitenwandungen 15.

Durch die Seitenwandungen 15 werden stirnseitige Flächen 150, durch die obere Wandung 13 eine stirnseitige Fläche 130 und durch die untere Wandung 14 eine stirnseitige Fläche 140 gebildet.

Wie ersichtlich ist, weist das Lastweiterleitungselement 12 in der vorliegenden Ausführungsform ebenfalls einen viereckigen, insbesondere rechteckigen Umriss auf. Darüber hinaus ist das Lastweiterleitungselement 12 rahmenartig ausgebildet, so dass eine Öffnung 12a ausgebildet wird.

Wie gestrichelt angedeutet, kann das Lastweiterleitungselement 12 stirnseitig im Batteriemodulgehäuse 11 aufgenommen und darin justiert werden.

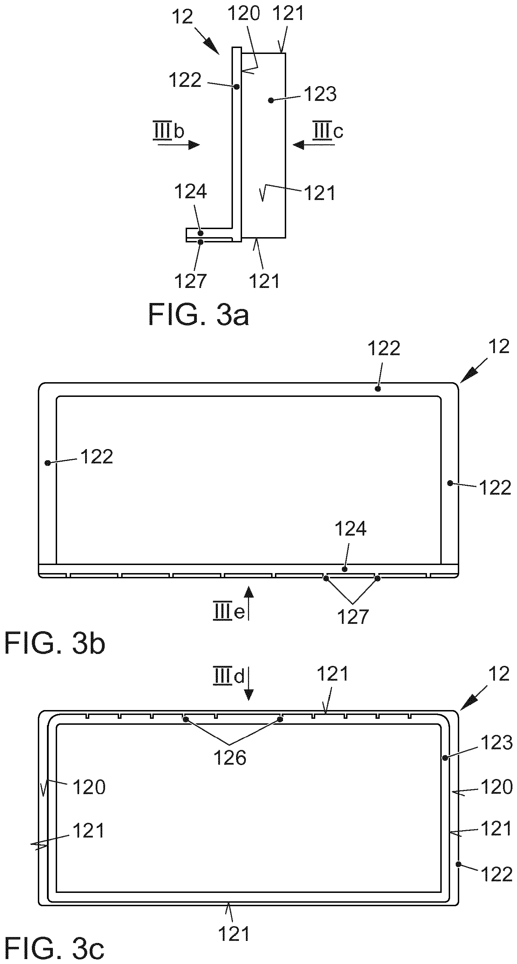

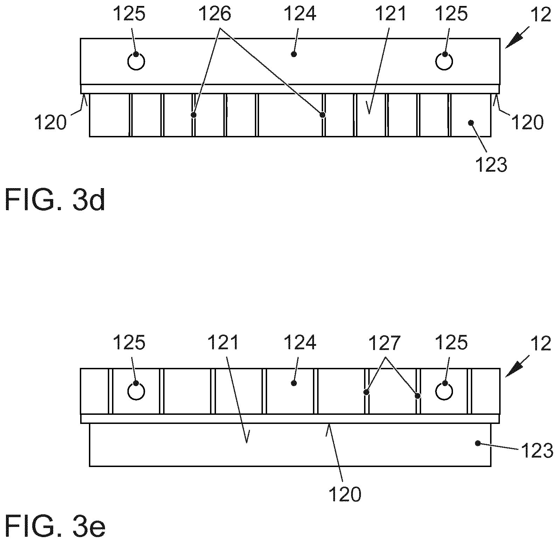

Mit Bezugnahme auch auf die Figuren 3, erfolgt dies derart, dass das Lastweiterleitungselement 12 mit einer umlaufenden, stirnseitigen Fläche 120 an den stirnseitigen Flächen 130 bis 150 des Batteriemodulgehäuses 11 anliegt und sich gegen diese Flächen hin abstützt. Des Weiteren ist das Lastweiterleitungselement 12 so ausgestaltet, dass es mit einer umlaufenden, äußeren Seitenfläche 121 eines umlaufenden Absatzes 123 von innen an den Wandungen 13 bis 15 des Batteriemodulgehäuses 11 anliegt. Es wird somit sicher im Batteriemodulgehäuse 11 geführt und fixiert.

Abweichend vom Ausführungsbeispiel ist alternativ oder zusätzlich denkbar, dass das Lastweiterleitungselement 12 die Wandungen 13 bis 15 des Batteriemodulgehäuses 11 von außen überragt.

Das Lastweiterleitungselement 12 weist ein rahmenartiges Basisteil 122 auf, von dem sich der umlaufende Absatz 123 rechtwinklig erstreckt. Hierdurch werden die bereits genannten Flächen 120 und 121 ausgebildet.

Ausgehend vom Basisteil 122, jedoch in entgegengesetzter Richtung zum umlaufenden Absatz 123, erstreckt sich eine Befestigungskonsole 124. Die Befestigungskonsole 124 ist an ihrer Unterseite mit stegartigen Erhöhungen 127 versehen, die sich in gleichmäßigen Abständen über die Unterseite der Befestigungskonsole 124 erstrecken. Durch die stegartigen Erhöhungen 127 wird der Befestigungskonsole 124 eine höhere Stabilität verliehen.

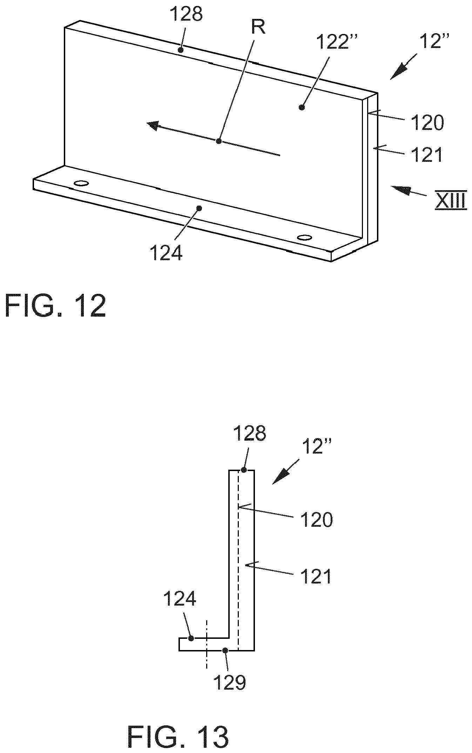

Des Weiteren sind in der Befestigungskonsole 124 zwei Befestigungslöcher 125 eingebracht, die zur Befestigung der Befestigungskonsole 124 mit den Karosseriebauteilen 10 dienen. Bedingt durch das rahmenartige Basisteil 122 und den davon abstehenden, umlaufenden Absatz 123 weist das Lastweiterleitungselement 12 einen L-förmigen Querschnitt auf. Später wird noch eine Ausführungsform des Lastweiterleitungselementes vorgestellt, bei dem der Querschnitt nur bereichsweise L-förmig ausgebildet ist (vergleiche auch Fig. 12).

Schließlich sind noch rillenartige Vertiefungen 126 zu erwähnen, welche sich in der Zeichnungsdarstellung an einer Oberseite des umlaufenden Absatzes 123 befinden. Die rillenartigen Vertiefungen 126 erstrecken sich ausgehend von der stirnseitigen Fläche 120 des rahmenartigen Basisteils 122 in einem rechten Winkel zu diesem und erstrecken sich über die gesamte Seitenfläche 121. In Montageposition des Lastweiterleitungselementes 12 begünstigen die rillenartigen Vertiefungen 126 ein leichteres Entweichen von Gas aus dem Batteriemodulgehäuse 11.

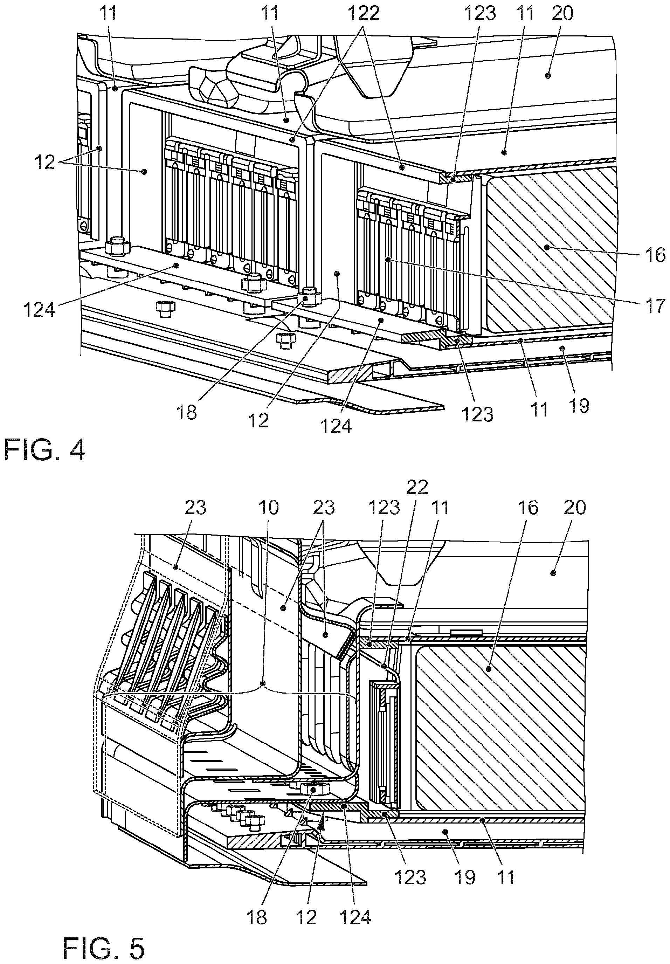

Fig. 4 zeigt nun einen Detailausschnitt, bei dem mehrere Batteriemodulgehäuse 11 mit aufgenommenen Batteriezellen 16 und mit montierten, d. h. stirnseitig eingefügten Lastweiterleitungselementen 12 ersichtlich sind.

Mit 17 sind elektrische Anschlüsse (Pole) der Batteriezellen 16 beziffert. Über Schraubverbindungen 18 können die Befestigungskonsolen 124 der Lastweiterleitungselemente 12 mit einem als Schweller ausgebildeten Karosseriebauteil 10 (hier nicht dargestellt, vergleiche Fig. 5) befestigt werden.

Anhand dieser Figur ist gut ersichtlich, wie sich das rahmenartige Basisteil 122 jeweils stirnseitig am Batteriemodulgehäuse 11 abstützt und dabei von innen über den umlaufenden Absatz 123 im Batteriemodulgehäuse 11 fixiert beziehungsweise geführt wird.

In der Fig. 5 ist zusätzlich das Karosseriebauteil 10 ersichtlich. Das Karosseriebauteil 10 ist als Schweller ausgebildet und besteht aus einem nicht näher bezifferten Bauteileverbund.

Es ist ersichtlich, dass das Karosseriebauteil 10, also der als Verbundbauteil ausgebildete Schweller, mit einem seiner Bauteile über die Schraubverbindungen 18 an der Befestigungskonsole 124 befestigt ist.

Mit 19 ist in den Figuren 4 und 5 jeweils eine karosserieseitige Bodenplatte beziffert, die die Batteriemodulgehäuse 11 nach unten abdeckt. Mit 20 sind über den Batteriemodulgehäusen 11 verlaufende, karosserieseitige Querträger beziffert.

Aus den Fig. 4 und 5 ist gut ersichtlich, dass durch die rahmenartige Bauweise des Lastweiterleitungselementes 12 ein leichter stirnseitiger Zugang zu den Batteriezellen 16 beziehungsweise den Anschlüssen 17 möglich ist. Außerdem kann so Wärme, die in den Batteriezellen 16 entsteht, über wärmeleitende Elemente 22 herausgeführt und an eine Kühlmittel-Leitung 23 abgeführt werden. Die Kühlmittel-Leitung 23 erstreckt sich stirnseitig entlang aller verbauten Batteriemodulgehäuse 11.

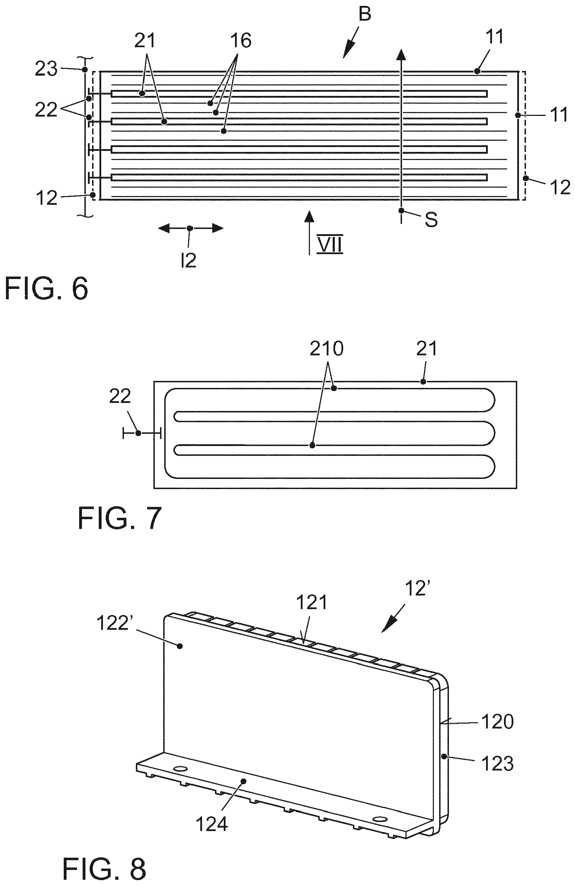

Anhand der Fig. 6 und 7 soll beschrieben werden, wie entstehende Wärme aus einem Batteriemodul B abgeführt wird. Dabei sind im Inneren des Batteriemodulgehäuses 11 nur die in diesem Zusammenhang wichtigen Bauelemente dargestellt.

So ist ersichtlich, dass sich die Batteriezellen 16 in Längserstreckung I2 des Batteriemodulgehäuses 11 erstrecken und in etwa die gleiche Länge wie das Batteriemodulgehäuse 11 aufweisen. Die Batteriemodule 16 sind so in einer Stapelrichtung S quer zur Längserstreckung I2 gestapelt. Eine andere Ausbildung und Ausrichtung von Batteriezellen im Batteriemodulgehäuse 11 ist jedoch auch denkbar.

Zwischen den Batteriezellen 16 sind nun in gleichmäßigen Abstände plattenartige Bauteile 21 eingebracht, welche parallel zu den Batteriezellen 16 ausgerichtet sind und sich so im gebildeten Stapel einfügen.

Jedes der plattenartigen Bauteile 21 ist mit einem Wärmeübertragungselement 210 ausgestattet, welches sich mäanderartig über die Fläche des plattenartigen Bauteils 21 erstreckt.

Das Wärmeübertragungselement 210 ist insbesondere in der Art eines Wärmerohrs (sogenannte Heatpipe) ausgebildet. Es bildet also ein in sich geschlossenes Wärmeübertragungssystem, bei dem auf der in der Figur rechten Seite ein Verdampfungsbereich und auf der linken, dem wärmeleitenden Element 22 zugewandten Seite, ein Kondensierungsbereich vorliegt. Im Kondensierungsbereich wird die Wärme an das wärmeleitende Element 22 abgegeben und vom wärmeleitenden Element 22, wie bereits beschrieben, an die Kühlmittel-Leitung 23 übergeben. Über die plattenartigen Bauteile 21, verbunden mit den Wärmeübertragungselementen 210 ist eine sehr platzsparende und wirksame Abführung der Wärme aus den Batteriemodulen B möglich.

Zwar bietet das Lastweiterleitungselement 12 gemäß den Figuren 3 den Vorteil einer besseren stirnseitigen Zugänglichkeit zu den Batteriemodulen B, jedoch ist gemäß Fig. 8 auch ein Lastweiterleitungselement 12' denkbar, welches in Abweichung zum Lastweiterleitungselement 12 ein plattenartiges Basisteil 122' aufweist.

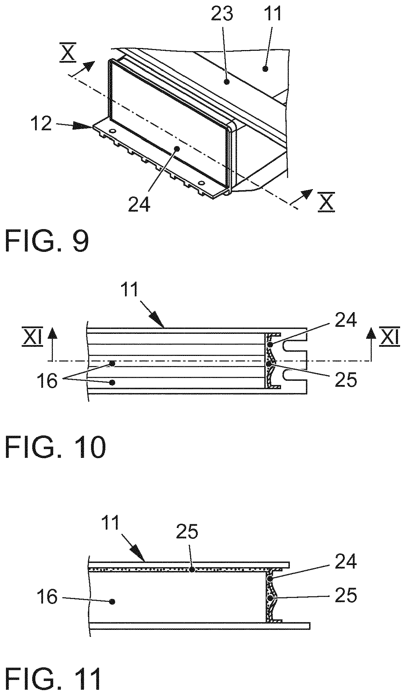

In den Fig. 9 bis 11 ist dargestellt, dass das Lastweiterleitungselement 12 zusätzlich mit einem Dichtelement 24 verschlossen sein kann. Das Dichtelement 24 kann beispielsweise aus Kunststoff sein. Es kann zur stirnseitigen Abdichtung des Batteriemodulgehäuses 11 gegen einen Austritt eines gegebenenfalls eingesetzten wärmeleitfähigen Mediums 25 eingesetzt werden.

Schließlich wird anhand der Fig. 12 und 13 ein Lastweiterleitungselement 12" beschrieben, welches eine vereinfachte Geometrie aufweist und dadurch sehr rationell, insbesondere in einem Strangpressverfahren herstellbar ist.

So ist ersichtlich, dass das Lastweiterleitungselement 12" im Umriss ebenfalls rechteckförmig ausgebildet ist. Im Unterschied zu den vorherigen Ausführungsbeispielen sind jedoch die stirnseitige Fläche 120 und die davon abstehende Seitenfläche 121 lediglich an den Seiten des Lastweiterleitungselementes 12" vorhanden. An einer Oberseite 128 und an einer Unterseite 129 ist das Lastweiterleitungselement 12" hingegen eben ausgebildet. Ebenfalls ist eine Befestigungskonsole 124 zur Befestigung des Lastweiterleitungselementes 12" vorhanden.

Die Herstellung des Lastweiterleitungselementes 12" kann nun derart erfolgen, dass das in Fig. 13 ersichtliche Profil zunächst mit Hilfe des sehr wirtschaftlichen Strangpressverfahrens hergestellt wird (vgl. mögliche Strangpressrichtung R in Fig. 12), dann eine Ablängung auf die gewünschte Länge erfolgt und abschließend jedes abgelängte Bauteil an den Seiten derart nachbearbeitet wird, dass der seitliche Absatz und damit die Flächen 120 und 121 entstehen. Die Nachbearbeitung kann beispielsweise durch ein Fräsen erfolgen.

Es ist noch darauf hinzuweisen, dass bei Einsatz des Lastweiterleitungselementes 12" sich dieses mit seiner stirnseitigen Fläche 120 lediglich gegen die stirnseitigen Flächen 150 der Seitenwandungen 15 des Batteriemodulgehäuses 11 abstützt (vergleiche auch Fig. 2). Da die Wände 13 und 14 (Deckel und Boden) entsprechend ihren zugedachten Funktionen dünner als die Seitenwandungen 15 ausgebildet sind, kann somit eine Belastung der Wandungen 13 und 14 bei einer Crashlast vermieden werden.

Wie bereits erwähnt, ist das Batteriemodulgehäuse 11 vorzugsweise aus einem Faserverbundkunststoff hergestellt. Die Fasern des Faserverbundkunststoffes sind dabei in Längsrichtung I2 des Batteriemodulgehäuses 11 ausgerichtet. Somit kann das Batteriemodulgehäuse 11 wirtschaftlich im Strangziehverfahren (Pultrusion) hergestellt werden und unter Zuhilfenahme des Lastweiterleitungselementes 12, 12' oder 12" in Längsrichtung I2 sehr gut Kräfte übertragen.

### BEZUGSZEICHENLISTE

- 10: Karosseriebauteile; Schweller
- 11: Batteriemodulgehäuse
- 12, 12', 12": Lastweiterleitungselement
- 12a: Öffnung
- 13: obere Wandung
- 14: untere Wandung
- 15: Seitenwandungen
- 16: Batteriezellen
- 17: elektrische Anschlüsse (Pole)
- 18: Schraubverbindungen
- 19: karosserieseitige Bodenplatte
- 20: karosserieseitige Querträger
- 21: plattenartige Bauteile
- 22: wärmeleitendes Element
- 23: Kühlmittel-Leitung
- 24: Dichtelement (Kunststoffkappe)
- 25: wärmeleitfähiges Medium
- 120: stirnseitige Fläche
- 121: Seitenfläche
- 122: rahmenartiges Basisteil
- 122', 122": plattenartiges Basisteil
- 123: umlaufender Absatz
- 124: Befestigungskonsole
- 125: Befestigungslöcher
- 126: rillenartige Vertiefungen
- 127: stegartige Erhöhungen
- 128: Oberseite
- 129: Unterseite
- 130: stirnseitige Fläche
- 140: stirnseitige Fläche
- 150: stirnseitige Fläche
- 210: Wärmeübertragungselement
- B: Batteriemodul
- F: Fahrtrichtung
- K: elektrisch antreibbares Kraftfahrzeug
- L: Crashlast
- I1: Längserstreckung des Kraftfahrzeugs
- I2: Längserstreckung der Batteriemodulgehäuse
- LPF: Lastpfad
- R: Strangpressrichtung
- S: Stapelrichtung

## Patentansprüche

1. Montageanordnung eines elektrisch antreibbaren Kraftfahrzeugs (K) mit wenigstens einem, mehrere Batteriezellen (16) zu einem Batteriemodul (B) aufnehmenden Batteriemodulgehäuse (11), wobei das Batteriemodul (B) mit seiner Längserstreckung (I2) quer zu einer Längserstreckung (I1) des Kraftfahrzeugs (K) ausgerichtet ist und wenigstens ein gesondertes Lastweiterleitungselement (12, 12', 12") zur Weiterleitung einer auftretenden Crashlast (L) vorhanden ist, **dadurch gekennzeichnet, dass** das Lastweiterleitungselement (12, 12', 12") an jeder Stirnseite des Batteriemodulgehäuses (11) zwischen einem Karosseriebauteil (10) und einer Stirnseite des Batteriemodulgehäuses (11) angeordnet ist, derart, dass bei einer in das Karosserieteil (10) eingeleiteten Crashlast (L) ein Lastpfad (LPF) gebildet wird, der zumindest das crashzugewandte Karosseriebauteil (10), das crashzugewandte Lastweiterleitungselement (12, 12', 12"), das Batteriemodulgehäuse (11), das crashabgewandte Lastweiterleitungselement (12, 12', 12") und das crashabgewandte Karosseriebauteil (10) umfasst.

2. Montageanordnung nach Anspruch 1, **dadurch gekennzeichnet, dass** sich das Lastweiterleitungselement (12, 12', 12") zumindest bereichsweise gegen eine stirnseitige Fläche (130, 140, 150) des Batteriemodulgehäuses (11) abstützt und am Karosseriebauteil (10) befestigt ist.

3. Montageanordnung nach Anspruch 1 oder 2, **dadurch gekennzeichnet, dass** die Karosseriebauteile (10) Schweller sind.

4. Montageanordnung nach einem der vorhergehenden Ansprüche, **dadurch gekennzeichnet, dass** das Lastweiterleitungselement (12, 12', 12") im Umriss viereckartig ausgebildet ist, wobei sich das Lastweiterleitungselement (12, 12', 12") zumindest bereichsweise mit einer stirnseitigen Fläche (120) gegen eine stirnseitige Fläche (130, 140, 150) des Batteriemodulgehäuses (11) abstützt und mit einer Seitenfläche (121) das Batteriemodulgehäuse (11) innen- und/oder außenseitig berührt.

5. Montageanordnung nach Anspruch 4, **dadurch gekennzeichnet, dass** das Lastweiterleitungselement (12) im Umriss rahmenartig ausgebildet ist.

6. Montageanordnung nach Anspruch 4 oder 5, **dadurch gekennzeichnet, dass** sich das Lastweiterleitungselement (12') mit seiner stirnseitigen Fläche (120) lediglich oder zumindest überwiegend gegen stirnseitige Flächen (150) von Seitenwandungen (15) des Batteriemodulgehäuses (11) abstützt.

7. Montageanordnung nach einem der vorhergehenden Ansprüche, **dadurch gekennzeichnet, dass** zwischen den Batteriezellen (16) wenigstens ein plattenartiges Bauteil (21) mit einem Wärmeübertragungselement (210) angeordnet ist, welches an einer Stirnseite des Batteriemodulgehäuses (11) über eine wärmeleitende Verbindung (22) mit einer Kühlmittel-Leitung (23) verbunden ist.

8. Montageanordnung nach einem der vorhergehenden Ansprüche, **dadurch gekennzeichnet, dass** das Batteriemodulgehäuse (11) aus einem Faserverbundkunststoff ist.

9. Batteriemodul (B) für eine Traktionsbatterie zur Montage in einer Montageanordnung nach einem der vorhergehenden Ansprüche, mit einem mehrere Batteriezellen (16) aufnehmendes Batteriemodulgehäuse (16), **dadurch gekennzeichnet, dass** in einer Stapelrichtung (S) der Batteriezellen (16) gesehen zwischen den Batteriezellen (16) wenigstens ein plattenartiges Bauteil (21) mit einem Wärmeübertragungselement (210) angeordnet ist.

10. Batteriemodul (B) nach Anspruch 9, **dadurch gekennzeichnet, dass** sich das Wärmeübertragungselement (210) mäanderförmig über die Fläche des plattenartigen Bauteils (21) erstreckt.

11. Batteriemodul (B) nach Anspruch 9 oder 10, **dadurch gekennzeichnet, dass** das Wärmeübertragungselement (210) nach Art eines Wärmerohrs ausgebildet ist.

12. Lastweiterleitungselement (12, 12') für eine Montageanordnung nach einem der vorhergehenden Ansprüche 1 bis 8, welches im Umriss viereckartig ausgebildet ist, mit einem zumindest bereichsweise L-förmigen Querschnitt, durch den eine stirnseitige Fläche (120) und eine davon rechtwinklig abstehende Seitenfläche (121) ausgebildet wird.

13. Lastweiterleitungselement (12) nach Anspruch 12, **dadurch gekennzeichnet, dass** das Lastweiterleitungselement (12) im Umriss rahmenartig ausgebildet ist.

14. Lastweiterleitungselement (12) nach Anspruch 12 oder 13, **dadurch gekennzeichnet, dass** in die Seitenfläche (121) zumindest bereichsweise mehrere rillenartige Vertiefungen (126) eingebracht sind, welche sich ausgehend von der stirnseitigen Fläche (120) rechtwinklig zu dieser über die Seitenfläche (121) erstrecken.
